(19) **Europäisches Patentamt / European Patent Office / Office européen des brevets**

(11) **EP 4 780 124 A1**

(12) **EUROPEAN PATENT APPLICATION**
published in accordance with Art. 153(4) EPC

(43) Date of publication:
**22.07.2026   Bulletin 2026/30**

(21) Application number: 24865749.6

(22) Date of filing: 03.09.2024

(51) International Patent Classification (IPC):
**H04W 74/0833** (2024.01)   **H04L 5/00** (2006.01)
**H04W 72/0453** (2023.01)   **H04W 72/23** (2023.01)
**H04W 72/0446** (2023.01)   **H04W 48/10** (2009.01)
**H04W 4/70** (2018.01)

(52) Cooperative Patent Classification (CPC):
**H04L 5/00; H04W 4/70; H04W 48/10;
H04W 72/0446; H04W 72/0453; H04W 72/23;
H04W 74/0833**

(86) International application number:
**PCT/KR2024/013235**

(87) International publication number:
**WO 2025/058308 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **14.09.2023   US 202363538495 P**

(71) Applicant: **LG Electronics Inc.**
**Yeongdeungpo-gu
Seoul 07336 (KR)**

(72) Inventors:
• **SHIN, Seokmin**
  **Seoul 06772 (KR)**
• **NOH, Yujin**
  **Seoul 06772 (KR)**
• **YANG, Suckchel**
  **Seoul 06772 (KR)**

(74) Representative: **Mooser, Sebastian Thomas**
**Wuesthoff & Wuesthoff
Patentanwälte und Rechtsanwalt PartG mbB
Schweigerstraße 2
81541 München (DE)**

(54) **METHOD AND DEVICE FOR TRANSMITTING AND RECEIVING RANDOM ACCESS CHANNEL**

(57)  A method according to an embodiment of the present disclosure comprises receiving a Random Access Channel (RACH) configuration and transmitting a Physical Random Access Channel (PRACH) based on sets. Each of the sets includes PRACH occasions based on the number of repetitions. The sets include a first set and a second set related to frequency hopping. The first set and the second set are determined based on an order of a time resource index and/or a frequency resource index of a first PRACH occasion in each set among the sets within a time period.

【FIG. 17】

Start → Reception of RACH configuration —— S1710 → PRACH transmission —— S1720 → End

**Description**

[Technical Field]

The present disclosure relates to a method and a device for transmitting and receiving a random access channel.

[Background Art]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

Meanwhile, in Rel-18, PRACH repetition transmission using PRACH occasions (ROs) has been introduced for coverage enhancement.

[Disclosure]

[Technical Problem]

For PRACH repetition transmission, a number of repetitions (for example, $N_{preamble}^{rep}$) may be configured. ROs based on the number of repetitions are consecutive in a time domain and use the same frequency resources. In a specific example, each set for PRACH repetition transmission may be determined to include consecutive $N_{preamble}^{rep}$ ROs in the time domain within the same frequency resources. In this case, set(s) within a time period is defined/determined based on a first RO in the set.

According to a current standard as described above, the PRACH repetition transmission is performed based on ROs having the same frequency resource index.

An object of the present disclosure is to propose a method for supporting frequency hopping in PRACH repetition transmission. More specifically, an object of the present disclosure is to propose a method for supporting frequency hopping while minimizing modification of existing rules defined for a determination of set(s) constituted by ROs related to PRACH repetition transmission.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

A method performed by a user equipment (UE) according to an embodiment of the present disclosure comprises receiving a Random Access Channel (RACH) configuration and transmitting a Physical Random Access Channel (PRACH) based on sets.

Each of the sets includes PRACH occasions based on the number of repetitions.

The sets include a first set and a second set related to frequency hopping.

The first set and the second set are determined based on an order of a time resource index and/or a frequency resource index of a first PRACH occasion in each set among the sets within a time period.

The second set may be determined in an ascending order of the time resource index from the first set having the lowest frequency resource index among the sets within the time period.

Based on that there is no set among the sets based on a time resource index larger than the time resource index based on the first set:

The second set may be determined in an ascending order of the frequency resource index from the first set.

The frequency hopping may be performed based on i) a first PRACH occasion selected from the first set or the second set and ii) a second PRACH occasion selected from the second set or the first set.

The second PRACH occasion may be located after the first PRACH occasion in a time domain.

The sets may include i) the first set and the second set and/or ii) a third set.

The third set may include the PRACH occasions related to the frequency hopping.

The frequency hopping related to the third set may be performed based on indices related to the number of repetitions.

In the third set, a frequency resource index of a PRACH occasion based on one of the indices may be different from a frequency resource index of a PRACH occasion based on a next index among the indices.

The method may further comprise receiving a System Information Block (SIB), wherein the SIB includes a configuration related to the frequency hopping.

The configuration related to the frequency hopping may include i) information representing whether the frequency hopping is enabled, ii) information related to determination of the first set and the second set, and/or iii) information related to determination of a PRACH occasion for the frequency hopping.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure comprises transmitting a Random Access Channel (RACH) configuration and receiving a Physical Random Access Channel (PRACH) based on sets.

Each of the sets includes PRACH occasions based on the number of repetitions.

The sets include a first set and a second set related to frequency hopping.

The first set and the second set are determined based on an order of a time resource index and/or a frequency resource index of a first PRACH occasion in each set among the sets within a time period.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[Advantageous Effects]

According to the embodiments of the present disclosure, a frequency position is changed for each RO for PRACH repetition transmission. Accordingly, it is possible to obtain a frequency diversity gain in the preparation for an existing PRACH repetition transmission operation that is performed based on the ROs having the same frequency resource index.

Further, according to the embodiments of the present disclosure, sets for frequency hopping are determined based on an order of a time resource index and/or a frequency resource index of a first RO in each of the sets within a time period. Accordingly, it is possible to minimize modification of existing rules defined to determine a set(s) of the ROs related to the PRACH repetition transmission (for example, a determination based on the first RO of each set). In other words, it is possible to minimize implementation complexity of a terminal/base station required to support the PRACH repetition transmission together with frequency hopping.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[Description of Drawings]

FIG. 1 illustrates physical channels and general signal transmission used in a 3GPP system.

FIG. 2 illustrates RACH occasions for each preamble format.

FIG. 3 illustrates a random access procedure.

FIG. 4 illustrates an example of a RO group for PRACH repetition.

FIG. 5 illustrates another example of the RO group for PRACH repetition.

FIG. 6 illustrates an example of a RO group according to Method 1 of the present disclosure.

FIG. 7 illustrates another example of the RO group according to Method 1 of the present disclosure.

FIG. 8 illustrates an example of a RO group according to Method 2 of the present disclosure.

FIG. 9 illustrates another example of the RO group according to Method 2 of the present disclosure.

FIG. 10 illustrates an example of a RO group according to Method 3 of the present disclosure.

FIG. 11 illustrates another example of the RO group according to Method 3 of the present disclosure.

FIG. 12 illustrates a frequency hopping pattern according to an embodiment of the present disclosure.

FIG. 13 illustrates a frequency hopping pattern according to another embodiment of the present disclosure.

FIG. 14 illustrates pairing of P RO groups according to an embodiment of the present disclosure.

FIG. 15 illustrates an example of a frequency hopping pattern based on P RO groups according to an embodiment of the present disclosure.

FIG. 16 illustrates another example of the frequency hopping pattern based on the P RO groups according to the embodiment of the present disclosure.

FIG. 17 is a flowchart showing a method performed by a terminal according to an embodiment of the present disclosure.

FIG. 18 is a flowchart showing a method performed by a base station according to another embodiment of the present disclosure.

FIG. 19 illustrates configurations of a first device and a second device according to an embodiment of the present disclosure.

[Mode for Invention]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Physical Channel and General Signal Transmission

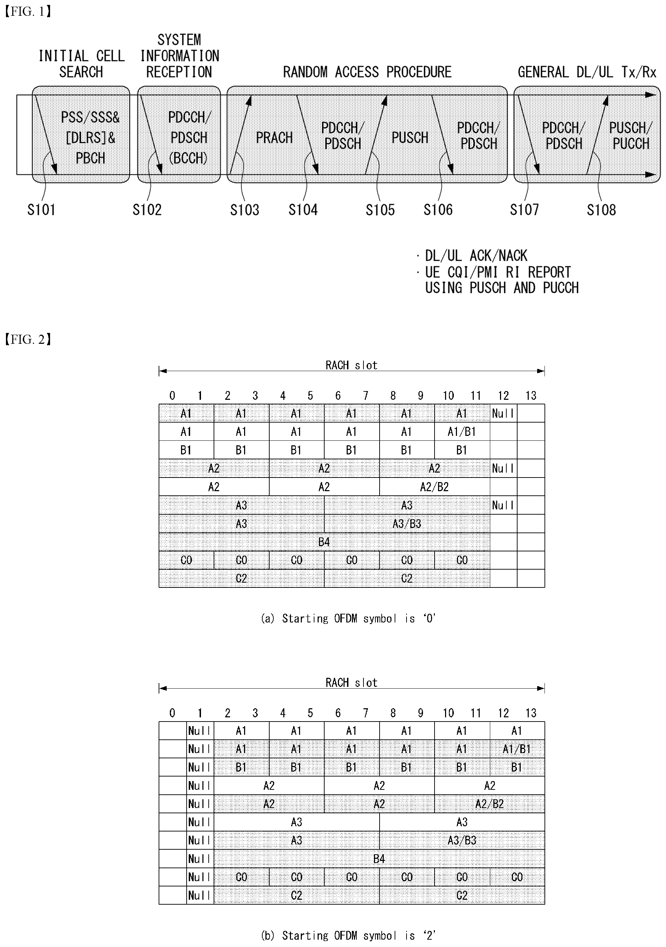

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

When there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the above procedure may then perform PDCCH/PDSCH reception (S107) and Physical Uplink Shared Channel (PUSCH)/Physical Uplink Control Channel (PUCCH) transmission (S108) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

An RACH slot is described below.

An RACH slot includes one or multiple RACH Occasion(s).

Slot duration is 1 ms for {1.25 kHz, 5 kHz} subcarrier spacing, and has scalable duration (i.e., 1 ms, 0.5 ms, 0.25 ms, 0.125 ms) for {15 kHz, 30 kHz, 60 kHz, 120 kHz} subcarrier spacing.

A start OFDM symbol index in an RACH slot has {0,2,x} values for short preamble formats.

FIG. 2 illustrates RACH occasions for each preamble format.

Referring to FIG. 2, an RACH slot may include one or more RACH occasions (ROs) for each preamble format (e.g., A1, A2, ..., C2). (a) of FIG. 2 illustrates a case in which a starting OFDM symbol is '0,' and (b) of FIG. 2 illustrates a case in which a starting OFDM symbol is '2.'

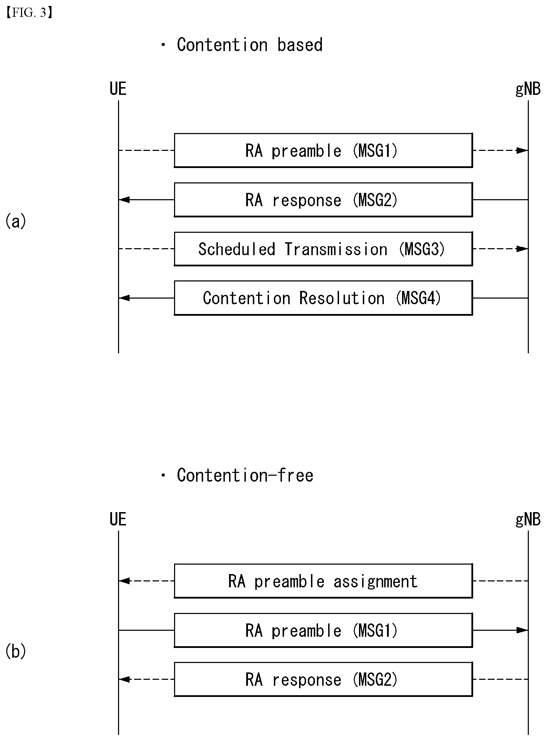

FIG. 3 illustrates a random access procedure.

(a) of FIG. 3 illustrates a contention based RACH procedure, and (b) of FIG. 3 illustrates a contention free RACH procedure.

MSG1 transmission is described below.

Subcarrier spacing for MSG1 is configured in an RACH configuration, and is provided in a handover command with respect to a contention-free RA procedure for handover.

Preamble indices for contention-based random access (CBRA) and contention-free random access (CFRA) are consecutively mapped to one SSB in one RACH transmission occasion.

- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.

The random access procedure may be a Type-1 random access procedure (4-step RA) or a Type-2 random access procedure (2-step RA).

The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.

The Type-2 random access procedure may include transmission of random access preamble and PUSCH (MsgA) and RAR reception (MsgB).

**Configuration/Operation Related to Random Access Preamble**

8.1 Random access preamble

Physical random access procedure for a UE is triggered upon request of a PRACH transmission by higher layers or by a PDCCH order for a cell. A configuration by higher layers for a PRACH transmission includes the following:

- A configuration for PRACH transmission on the cell [4, TS 38.211].
- A preamble index, a preamble SCS, $P_{\text{PRACH,target}}$, a corresponding RA-RNTI when applicable [11, TS 38.321], and a PRACH resource for the cell.
- A number of $N_{\text{preamble}}^{\text{rep}} > 1$ preamble repetitions for the PRACH transmission if the UE would transmit the PRACH with repetitions.

A UE transmits a PRACH on a cell using the selected PRACH format with transmission power $P_{\text{PRACH},b,f,c}(i)$, as described in clause 7.4, on the indicated PRACH resource or on a determined set of $N_{\text{preamble}}^{\text{rep}}$ resources using a same spatial filter in case of $N_{\text{preamble}}^{\text{rep}}$ preamble repetitions.

For Type-1 random access procedure, a UE is provided a number $N$ of SS/PBCH block indexes associated with one PRACH occasion and a number $R$ of contention based preambles per SS/PBCH block index per valid PRACH occasion by ssb-perRACH-OccasionAndCB-PreamblesPerSSB.

For Type-2 random access procedure with common configuration of PRACH occasions with Type-1 random access procedure, a UE is provided a number $N$ of SS/PBCH block indexes associated with one PRACH occasion by ssb-perRACH-OccasionAndCB-PreamblesPerSSB and a number $Q$ of contention based preambles per SS/PBCH block index per valid PRACH occasion by msgA-CB-PreamblesPerSSB-PerSharedRO. The PRACH transmission can be on a subset of PRACH occasions associated with a same SS/PBCH block index within an SSB-RO mapping cycle for a UE provided with a PRACH mask index by msgA-SSB-SharedRO-MaskIndex according to [11, TS 38.321].

For Type-2 random access procedure with separate configuration of PRACH occasions with Type-1 random access procedure, a UE is provided a number $N$ of SS/PBCH block indexes associated with one PRACH occasion and a number $R$ of contention based preambles per SS/PBCH block index per valid PRACH occasion by msgA-SSB-PerRACH-OccasionAndCB-PreamblesPerSSB when provided; otherwise, by ssb-perRACH-OccasionAndCB-PreamblesPerSSB.

For a random access procedure associated with a feature combination indicated by FeatureCombination-Preambles, a UE is provided a number $N$ of SS/PBCH block indexes associated with one PRACH occasion by ssb-perRACH-OccasionAndCB-PreamblesPerSSB or msgA-SSB-PerRACH-OccasionAndCB-PreamblesPerSSB when provided and a number $S$ of contention based preambles per SS/PBCH block index per valid PRACH occasion by startPreambleForThisPartition and numberOfPreamblesPerSSB-ForThisPartition. The PRACH transmission can be on a subset of PRACH occasions associated with a same SS/PBCH block index within an SSB-RO mapping cycle for a UE provided with a PRACH mask index by ssb-SharedRO-MaskIndex according to [11, TS 38.321].

For Type-1 random access procedure, or for Type-2 random access procedure with separate configuration of PRACH occasions from Type 1 random access procedure, if $N < 1$, one SS/PBCH block index is mapped to $1/N$ consecutive valid PRACH occasions and $R$ contention based preambles with consecutive indexes associated with the SS/PBCH block index per valid PRACH occasion start from preamble index 0. If $N \geq 1$, $R$ contention based preambles with consecutive indexes associated with SS/PBCH block index $n$, $0 \leq n \leq N - 1$, per valid PRACH occasion start from preamble index $n \cdot N_{\text{preamble}}^{\text{total}}/N$ where $N_{\text{preamble}}^{\text{total}}$ is provided by totalNumberOfRA-Preambles for Type-1 random access procedure, or by msgA-TotalNumberOfRA-Preambles for Type-2 random access procedure with separate configuration of PRACH occasions from a Type 1 random access procedure, and is an integer multiple of $N$.

For Type-2 random access procedure with common configuration of PRACH occasions with Type-1 random access procedure, if $N < 1$, one SS/PBCH block index is mapped to $1/N$ consecutive valid PRACH occasions and $Q$ contention based preambles with consecutive indexes associated with the SS/PBCH block index per valid PRACH occasion start from preamble index $R$. If $N \geq 1$, $Q$ contention based preambles with consecutive indexes associated with SS/PBCH block index $n$, $0 \leq n \leq N - 1$, per valid PRACH occasion start from preamble index $n \cdot N_{\text{preamble}}^{\text{total}}/N + R$, where $N_{\text{preamble}}^{\text{total}}$ is provided by totalNumberOfRA-Preambles for Type-1 random access procedure.

SS/PBCH block indexes provided by ssb-PositionsInBurst in SIB1 or in ServingCellConfigCommon are mapped to valid PRACH occasions in the following order where the parameters are described in [4, TS 38.211].

- First, in increasing order of preamble indexes within a single PRACH occasion
- Second, in increasing order of frequency resource indexes for frequency multiplexed PRACH occasions
- Third, in increasing order of time resource indexes for time multiplexed PRACH occasions within a PRACH slot
- Fourth, in increasing order of indexes for PRACH slots

An association period, starting from frame 0, for mapping SS/PBCH block indexes to PRACH occasions is the smallest integer number in the set determined by the PRACH configuration period according Table 8.1-1 such that $N_{\text{Tx}}^{\text{SSB}}$

SS/PBCH block indexes are mapped at least once to the PRACH occasions within the association period, where a UE obtains $N_{\text{Tx}}^{\text{SSB}}$ from the value of ssb-PositionsInBurst in SIB1 or in ServingCellConfigCommon. If after an integer number of SS/PBCH block indexes to PRACH occasions mapping cycles within the association period there is a set of PRACH occasions or PRACH preambles that are not mapped to $N_{\text{Tx}}^{\text{SSB}}$ SS/PBCH block indexes, no SS/PBCH block indexes are mapped to the set of PRACH occasions or PRACH preambles. An association pattern period includes one or more association periods and is determined so that a pattern between PRACH occasions and SS/PBCH block indexes repeats at most every 160 msec.

PRACH occasions not associated with SS/PBCH block indexes after an integer number of association periods, if any, are not used for PRACH transmissions.

For a PRACH transmission triggered by higher layers, if ssb-ResourceList is provided, the PRACH mask index is indicated by ra-ssb-OccasionMaskIndex which indicates the PRACH occasions for the PRACH transmission where the PRACH occasions are associated with the selected SS/PBCH block index.

The PRACH occasions are mapped consecutively per corresponding SS/PBCH block index. The indexing of the PRACH occasion indicated by the mask index value is reset per mapping cycle of consecutive PRACH occasions per SS/PBCH block index. The UE selects for a PRACH transmission the PRACH occasion indicated by PRACH mask index value for the indicated SS/PBCH block index in the first available mapping cycle.

For the indicated preamble index, the ordering of the PRACH occasions is

- First, in increasing order of frequency resource indexes for frequency multiplexed PRACH occasions
- Second, in increasing order of time resource indexes for time multiplexed PRACH occasions within a PRACH slot
- Third, in increasing order of indexes for PRACH slots

For a PRACH transmission with $N_{\text{preamble}}^{\text{rep}}$ preamble repetitions, a set consists of $N_{\text{preamble}}^{\text{rep}}$ valid PRACH occasions that are consecutive in time, use same frequency resources, and are associated with same one or more SS/PBCH block index(es), and each SS/PBCH block index is associated with same preamble indexes in all valid PRACH occasions within the set.

For a PRACH transmission with preamble repetitions, a time period, starting from frame 0, is the smallest integer number of association pattern periods such that at least one set of valid PRACH occasions for each of the $N_{\text{Tx}}^{\text{SSB}}$ SS/PBCH block indexes can be determined within the time period for all configured number of preamble repetitions. The set(s) of valid PRACH occasions for each configured number of preamble repetitions repeats every time period.

Within a time period, for set(s) of $N_{\text{preamble}}^{\text{rep}}$ valid PRACH occasions for a PRACH transmission with $N_{\text{preamble}}^{\text{rep}}$ preamble repetitions

- the first valid PRACH occasion of the first set is the first valid PRACH occasion
- the first valid PRACH occasion of subsequent sets, if any, is determined according to an ordering of valid PRACH occasions
- first, in increasing order of frequency resource indexes for frequency multiplexed PRACH occasions
- second, in increasing order of time resource indexes for time multiplexed PRACH occasions
  where, for each frequency resource index for frequency multiplexed PRACH occasions
- the first valid PRACH occasion of the first set is the first valid PRACH occasion
- the first valid PRACH occasion of subsequent sets, if any,
- is after TimeOffsetBetweenStartingRO consecutive valid PRACH occasions in time from the first valid PRACH occasion of the previous set, where each PRACH occasion is associated with same SS/PBCH block index(es) and each SS/PBCH block index is associated with same preambles, if TimeOffsetBetweenStartingRO is provided
- is after the PRACH occasions for the previous set, if TimeOffsetBetweenStartingRO is not provided

Table 8.1-1: Mapping between PRACH configuration period and SS/PBCH block to PRACH occasion association period

| PRACH configuration period (msec) | Association period (number of PRACH configuration periods) |
|---|---|
| 10 | {1, 2, 4, 8, 16} |
| 20 | {1, 2, 4, 8} |

(continued)

| PRACH configuration period (msec) | Association period (number of PRACH configuration periods) |
|---|---|
| 40 | {1, 2, 4} |
| 80 | {1, 2} |
| 160 | {1} |

The above-described configuration/definition/operation may be referenced to clarify definitions/operations of embodiments to be described below. In an example, in embodiments to be described below, an RO may mean the above-described PRACH occasion. In an example, in embodiments to be described below, the RO group including N ROs based on the number of repetitions (N) may be interpreted as/replaced with a set of $N_{\mathrm{preamble}}^{\mathrm{rep}}$ valid PRACH occasions. That is, one RO group may be interpreted as/replaced with one set. In an example, in the embodiments to be described below, a starting RO in the RO group may be interpreted as/replaced with a first valid PRACH occasion of the set.

RA-RNTI (MSGB-RNTI)

Currently, RA-RNTI and MSGB-RNTI applied for an FR1/2 region may be defined as follows.

5.1.3 Random Access Preamble transmission

The RA-RNTI associated with the PRACH occasion in which the random access preamble is transmitted, is calculated as follows:

$$\mathrm{RA\text{-}RNTI} = 1 + s\_id + 14 \times t\_id + 14 \times 80 \times f\_id + 14 \times 80 \times 8 \times ul\_carrier\_id$$

where s_id is the index of the first OFDM symbol of the PRACH occasion ($0 \leq s\_id < 14$), t_id is the index of the first slot of the PRACH occasion in a system frame ($0 \leq t\_id < 80$), where the subcarrier spacing to determine t_id is based on the value of $\mu$ specified in clause 5.3.2 in TS 38.211 [8], f_id is the index of the PRACH occasion in the frequency domain ($0 \leq f\_id < 8$), and ul_carrier_id is the UL carrier used for Random Access Preamble transmission (0 for NUL carrier, and 1 for SUL carrier).

5.1.3a MSGA transmission

The MSGB-RNTI associated with the PRACH occasion in which the random access preamble is transmitted is calculated as follows:

$$\mathrm{MSGB\text{-}RNTI} = 1 + s\_id + 14 \times t\_id + 14 \times 80 \times f\_id + 14 \times 80 \times 8 \times ul\_carrier\_id + 14 \times 80 \times 8 \times 2$$

where s_id is the index of the first OFDM symbol of the PRACH occasion ($0 \leq s\_id < 14$), t_id is the index of the first slot of the PRACH occasion in a system frame ($0 \leq t\_id < 80$), where the subcarrier spacing to determine t_id is based on the value of $\mu$ specified in clause 5.3.2 in TS 38.211 [8], f_id is the index of the PRACH occasion in the frequency domain ($0 \leq f\_id < 8$), and ul_carrier_id is the UL carrier used for Random Access Preamble transmission (0 for NUL carrier, and 1 for SUL carrier). The RA-RNTI is calculated as specified in clause 5.1.3.

RO Group for PRACH Repetition

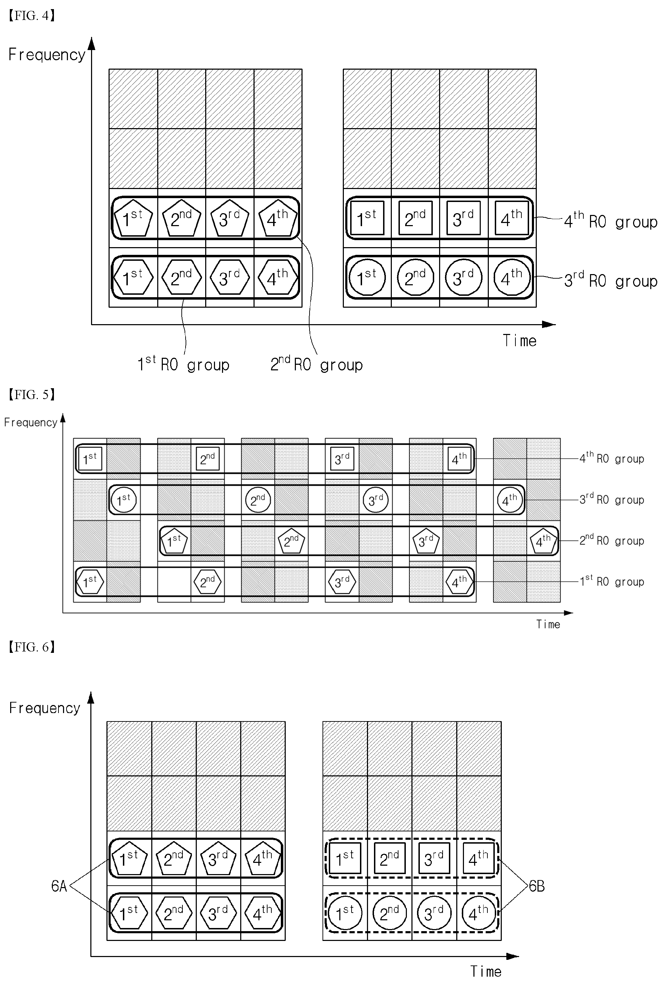

In Rel-18 coverage enhancement, the RO group for PRACH repetition has been introduced. When the base station configures/indicates the number of repetitions (N) to the terminal, N valid ROs in ascending order of a time domain index among ROs existing on the same frequency among valid ROs are determined to be in one RO group. This is represented as in FIGS. 4 and 5. Hereinafter, this will be described in detail.
FIG. 4 illustrates an example of the RO group for PRACH repetition.
For a determination of the RO group in FIG. 4, the following configuration is assumed:

# of repetition = 4, # of SSBs = 2, # of FDMed RO = 4, and # of SSBs per RO = 1/2

'# of repetition' means the number of repetitions (for example, $N_{\mathrm{preamble}}^{\mathrm{rep}} = 4$).

'# of SSBs' indicates the number of SSBs (for example, $N_{\mathrm{Tx}}^{\mathrm{SSB}}$) based on a time period related to the PRACH repetition transmission. Specifically, the number of SSBs may be acquired as follows. The terminal may acquire the number of SSBs ($N_{\mathrm{Tx}}^{\mathrm{SSB}}$) from a value of a higher layer parameter ssb-PositionsInBurst. The higher layer parameter ssb-PositionsInBurst may be configured/indicated based on a system information block (for example, SIB1) or serving cell configuration information (for example, ServingCellConfigCommon).

'# of FDMed RO' indicates the number of frequency-division-multiplexed ROs. The frequency-division-multiplexed ROs may mean ROs within one time instance.

'# of SSBs per RO' indicates the number of SSBs for each RO.

Referring to FIG. 4, RO groups (1st to 4th RO groups) associated with one of two SSBs are determined. ROs (1st to 4th) belonging to each RO group are based on the same frequency resource index.

FIG. 5 illustrates another example of the RO group for PRACH repetition.

Referring to FIG. 5, the following configuration is assumed for a determination of the RO group:

# of repetition = 4, # of SSBs = 3, # of FDMed RO = 4, and # of SSBs per RO = 1

Referring to FIG. 5, RO groups (1st to 4th RO groups) associated with one of three SSBs are determined. ROs (1st to 4th) belonging to each RO group are based on the same frequency resource index.

As described above, the RO groups are determined in ascending order of the frequency resource indices of the first ROs in the respective RO groups, and when the frequency resource indices are the same, the RO groups are determined in ascending order of the time resource indices of the first ROs in the respective RO groups.

Among the valid ROs associated with the same beam/SSB (for example, the same SS/PBCH block index), N ROs existing on the same frequency resources may be grouped into one RO group. The valid ROs associated with the same beam/SSB may mean all ROs based on four RO groups in FIGS. 4 and 5.

The contents described above can be applied by being combined with methods according to the present disclosure described below, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell (cell operating in the licensed band (L-band)) and/or a U-cell (cell operating in the unlicensed band (U-band)) defined in the NR system or the U-Band system.

NR supports multiple numerologies (or subcarrier spacing (SCS)) for supporting diverse 5G services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz to overcome phase noise.

An NR frequency band is defined as two types of frequency ranges FR1 and FR2. FR1 and FR2 may be configured as shown in Table 5 below. FR2 may mean millimeter wave (mmW).

[Table 1]

| Frequency Range designation | Corresponding frequency range | Subcarrier Spacing |
|---|---|---|
| FR1 | 410 MHz - 7125 MHz | 15, 30, 60 kHz |
| FR2 | 24250 MHz - 52600 MHz | 60, 120, 240 kHz |

As described above, in the Rel-18 coverage enhancement, the RO group was introduced for PRACH repetition. It has been defined that only ROs located on the same frequency are used to constitute the RO group. When an RO frequency hopping operation is additionally supported in a PRACH repetition operation based on the RO group, a frequency diversity gain may be additionally obtained, and thus, there is an advantage in terms of coverage enhancement. Accordingly, the present disclosure proposes a method for performing the RO frequency hopping between the RO groups when a PRACH (Msg. A) preamble repetition operation is defined.

Specifically, the present disclosure proposes 1) methods for selecting/determining multiple RO groups belonging to the RO group pair and 2) methods for performing RO frequency hopping between the RO groups belonging to the RO group pair.

In particular, ROs used for multiple PRACH transmission (or PRACH repetition) referred to in the present disclosure are valid ROs (valid PRACH occasions). In the present disclosure, 'PRACH transmission,' 'RACH transmission,' or 'preamble transmission' may be interpreted as/replaced with 'MSG1 transmission.'

<RO Group Pairing Determination>

A case in which, after the terminal configures/determines the RO group for PRACH repetition, the RO frequency hopping is enabled from the base station may be assumed. The terminal may be defined to select two RO groups for RO frequency hopping. Hereinafter, methods for selecting two RO groups for a specific RO group pair will be described in detail.

(Implicit Determination for RO Group Pairing)

[Method 1]

1. [1-1]: When two or more starting ROs in different RO groups not belonging to the RO group pair exist at the specific time instance, two RO groups to which two starting ROs belong in ascending order from a starting RO having the lowest frequency position (that is, the lowest frequency index ($n_{RA}$)) may be determined to be the RO group pair. That is, hopping may be performed between the two RO groups based on the RO group pair.

The above-described RO group pair determination operation may be repeatedly performed until fewer than two (that is, one) starting RO in the RO group not belonging to the RO group pair remains in the time instance.

When there is no longer starting RO in the RO group not belonging to the RO group pair in the time instance, the operation [1-1] may be performed in a time instance in which the starting RO in the RO group not belonging to the RO group pair exists, while increasing the time instance in ascending order.

When there is one starting RO in the RO group not belonging to the RO group pair in the time instance, the following operation [1-2] may be performed.

2. [1-2]: When only one starting RO in the specific RO group exists in the same time instance, the RO group pair may be determined in ascending order of the time instance (for example, time resource index), and then, determined in ascending order of the frequency (for example, frequency resource index).

An RO group having a starting RO that exists first and the RO group that has previously had only one starting RO may be determined to be the RO group pair. In a location corresponding to a time instance having a larger time index value among the starting ROs in the RO groups belonging to the RO group pair, the operation [1-1] or the operation [1-2] may be performed again.

3. The operation [1-1] or the operation [1-2] may be repeatedly performed until a time period X (K association pattern periods) ends.

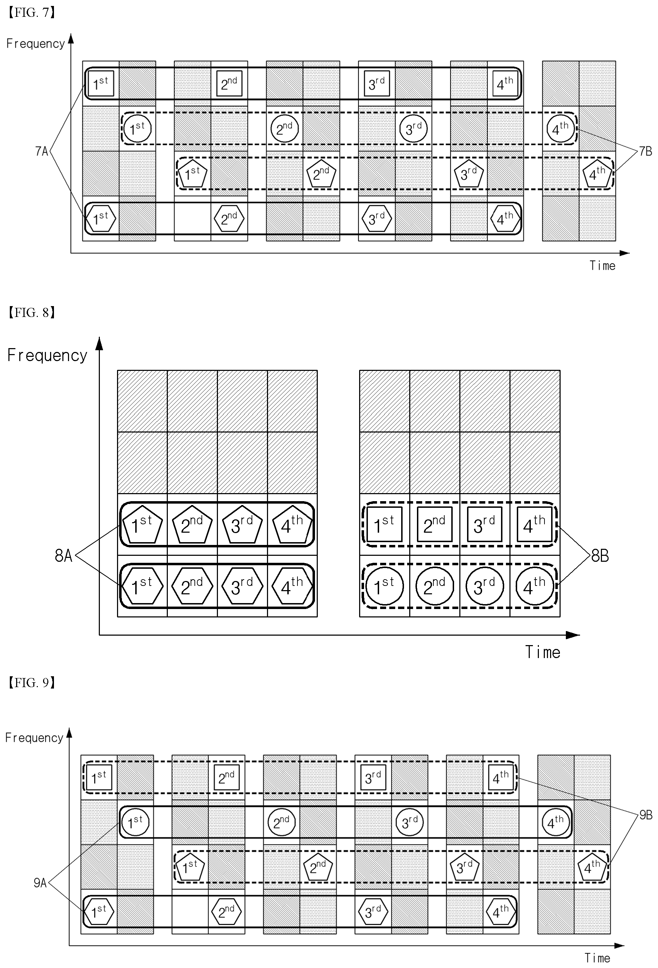

An example in which RO group pairing is performed using [Method 1] is represented as in FIGS. 6 and 7.

FIG. 6 illustrates an example of the RO group according to Method 1 of the present disclosure.

In FIG. 6, the following configuration is assumed.

# of repetition = 4, # of SSBs = 2, # of FDMed RO = 4, and # of SSBs per RO = 1/2

Specifically, FIG. 6 illustrates an example of RO group pairing based on Method 1. Referring to FIG. 6, RO group pairs 6A and 6B are determined based on the operation [1-1].

FIG. 7 illustrates another example of the RO group according to Method 1 of the present disclosure.

In FIG. 7, the following configuration is assumed.

# of repetition = 4, # of SSBs = 3, # of FDMed RO = 4, and # of SSBs per RO = 1

Specifically, FIG. 7 illustrates an example of RO group pairing based on Method 1. Referring to FIG. 6, the RO group pair 7A is determined based on the operation [1-1], and the RO group pair 7B is determined based on the operation [1-2].

[Method 2]

1. [2-1]: Among the RO groups not belonging to the RO group pair at the specific time instance, the RO group (for example, RO group 1) having the starting RO with the lowest frequency position (that is, the lowest frequency index ($n_{RA}$)) and the RO group (for example, RO group 2) having the next starting RO may be determined to be the RO group pair.

The RO group having the next starting RO may be determined in ascending order of the time instance (for example, time resource index) of the starting RO and/or in ascending order of the frequency (for example, frequency resource index) of the starting RO.

In an example, based on the ascending order of the time instance (for example, time resource index) of the starting RO, RO group 2 may be determined to be the RO group having the lowest time instance of the starting RO next to the starting RO in RO group 1.

Hopping may be performed between two RO groups (for example, RO group 1 and RO group 2) based on the RO group pair.

[2-1-A] A case in which, in a subsequent time instance, a second RO of an initially selected RO group (for example, RO group 1) exists may be assumed. In an example, a starting RO in RO group 1 and starting ROs in other RO groups may exist in the same time instance. In this case, the RO group pair may be determined based on a frequency of the specific time instance (for example, a time instance of the starting RO in RO group 1). The RO group (for example, RO group 1) and the RO group (for example, RO group 2) having a starting RO existing first in ascending order of the frequency may be determined to be the RO group pair.

Specifically, when there is no RO group determined in ascending order of the time instance of the starting RO (for example, when starting ROs in other RO groups exist in the same time instance as the starting RO in RO group 1), RO group 2 may be determined as follows. Based on the ascending order of the frequency (for example, the frequency resource index) of the starting RO, RO group 2 may be determined to be the RO group having the lowest frequency (for example, the frequency resource index) of the starting RO next to the starting RO in RO group 1.

2. [2-2] When the starting RO in the RO group not grouped into the RO group pair remains at the specific time instance, the operation [2-1] may be repeatedly performed on the RO groups not belonging to the RO group pair.

3. [2-3] When there is no longer any RO group not grouped into the RO group pair at the specific time instance, the operation [2-1] and the operation [2-2] may be performed at a next time instance. The operation [2-3] may be repeatedly performed in ascending order of the time instances.

4. The operation [2-1] or [2-2] or [2-3] may be repeatedly performed until the time period X (K association pattern periods) ends.

An example in which the RO group pairing is performed using [Method 2] is represented as in FIGS. 8 and 9.

FIG. 8 illustrates an example of the RO group according to Method 2 of the present disclosure.

In FIG. 8, the following configuration is assumed.

# of repetition = 4, # of SSBs = 2, # of FDMed RO = 4, and # of SSBs per RO = 1/2

Specifically, FIG. 8 illustrates an example of RO group pairing based on Method 2. Referring to FIG. 8, RO group pairs 8A and 8B are determined based on the operation [2-1-A].

FIG. 9 illustrates another example of the RO group according to Method 2 of the present disclosure.

In FIG. 9, the following configuration is assumed.

# of repetition = 4, # of SSBs = 3, # of FDMed RO = 4, and # of SSBs per RO = 1

Specifically, FIG. 9 illustrates another example of the RO group pairing based on Method 2. Referring to FIG. 9, the RO group pair 9A is determined based on the operation [2-1]. That is, RO group 1 is a RO group based on the lowest frequency resource index between two RO groups belonging to 9A. RO group 2 is a RO group having a starting RO (1$^{st}$) that exists first in ascending order of the time instance next to the starting RO (1$^{st}$) in RO group 1 between the two RO groups belonging to 9A.

Thereafter, an RO group pair 9B is determined based on the operation [2-1-A]. That is, RO group 1 is an RO group based on the lowest frequency resource index between two RO groups belonging to 9B. RO group 2 is a RO group having a starting RO that exists first in ascending order of the frequency next to the starting RO (1$^{st}$) in RO group 1 between the two RO groups belonging to 9B.

In examples according to parameters used in FIGS. 6 and 8, [Method 1] and [Method 2] have the same results. The RO group pairs 6A and 6B in FIG. 6 are the same as the RO group pairs 8A and 8B in FIG. 8.

In examples according to the parameters used in FIGS. 7 and 9, [Method 1] and [Method 2] have different results. That is, the RO group pairs 7A and 7B in FIG. 7 are different from the RO group pairs 9A and 9B in FIG. 9.

Specifically, when the RO group pair is determined based on [Method 2], a frequency spacing between the RO groups of each RO group pair is the same as two ROs (based on the starting RB of each RO). On the other hand, when the RO group pair is determined based on [Method 1], a frequency spacing related to each RO group pair is different. The RO groups of one RO group pair 7B have a frequency spacing of one RO (based on the starting RB of each RO) (for example, frequency resource indices 1 and 2), and the RO groups of the other RO group pair 7A have a frequency spacing of three ROs (based on the starting RB of each RO) (for example, frequency resource indices 0 and 3).

When the terminal attempts to perform the PRACH repetition transmission and the starting RO is randomly selected in a MAC layer, it may be desirable that spacings for RO frequency hopping be the same. In this case, [Method 2] may be applied.

The base station may configure/indicate an RO group pairing method to the terminal based on a system information block (SIB). In an example, the base station may select one of Method 1 or Method 2 and configure/indicate the method to the terminal for each PRACH configuration (or number of repetitions) supporting the PRACH repetition.

(Explicit Configuration for RO Group Pairing}

[Method 3]

1. A case in which M starting ROs associated with the same SSB index (SS/PBCH block index) are frequency-division-multiplexed (FDMed) at the specific time instance and exist may be assumed. The base station may configure/indicate one of RO group pair combinations defined below to the terminal as a common value through the SIB. Alternatively, the RO group pair combination according to the number of repetitions or the PRACH configuration may be defined in advance.
2. Alternatively, a frequency spacing (for example, a difference between frequency indices) between the RO groups constituting the RO group pair may be defined in advance.

In an example, the difference between the frequency indices may be floor(M/2) or ceil(M/2). Specifically, a difference between a frequency index of RO group 1 and a frequency index of RO group 2 may be floor(M/2) or ceil(M/2).
In an example, the frequency spacing may be defined/expressed as a spacing between the starting RBs of the starting ROs in the RO groups. That is, when the number of RBs occupied by one RO is Q, the frequency spacing may be expressed as floor(M/2) * Q RB or ceil(M/2) * Q RB.

3. In an example, the base station may configure/indicate a difference in frequency index (that is, delta) between the RO groups constituting the RO group pair to the terminal as a common value through the SIB. In an example, the base station may configure/indicate values of the differences in frequency index in accordance with the number of repetitions or the PRACH configuration to the terminal. In an example, a delta value having the common value (or an independent delta value for each number of repetitions or for each PRACH configuration) may be defined in advance (for example, delta = 1).
4. Hereinafter, examples of the RO group pair combinations according to an M value will be described.

A. In this case, a value within { } is a (relative) frequency domain index value. Delta indicates a frequency index difference between the RO groups of each RO group pair based on M ROs associated with the same SSB index. When there is no delta, the frequency index difference may be different for each RO group pair.
B. M = 2
RO group pair combination #1: {0, 1} (delta = 1)
C. M = 4

RO group pair combination #1: {0, 1}, {2, 3} (delta = 1)
RO group pair combination #2: {0, 2}, {1, 3} (delta = 2)
RO group pair combination #3: {0, 3}, {1, 2}

D. M = 6

RO group pair combination #1: {0, 1}, {2, 3}, {4, 5} (delta = 1)
RO group pair combination #2: {0, 3}, {1, 4}, {2, 5} (delta = 3)
RO group pair combination #3: {0, 2}, {1, 4}, {3, 5}
RO group pair combination #4: {0, 4}, {1, 5}, {2, 3}
RO group pair combination #5: {0, 5}, {1, 4}, {2, 3}

E. M = 8

RO group pair combination #1: {0, 1}, {2, 3}, {4, 5}, {6, 7} (delta = 1)
RO group pair combination #2: {0, 2}, {1, 3}, {4, 6}, {5, 7} (delta = 2)
RO group pair combination #3: {0, 4}, {1, 5}, {2, 6}, {3, 7} (delta = 4)
RO group pair combination #4: {0, 3}, {1, 2}, {4, 7}, {5, 6}

RO group pair combination #5: {0, 6}, {1, 7}, {2, 4}, {3, 5}
RO group pair combination #6: {0, 7}, {1, 6}, {2, 5}, {3, 4}

The above-described RO group pair combination according to M values is merely an example. The technical idea according to embodiments of the present disclosure is not intended to be limited to the examples of the combination of RO group pairs according to each M value.

5. When M is an odd number, an RO group pairing operation may be performed only among the RO groups corresponding to M-1 (from the lowest (or highest) frequency).

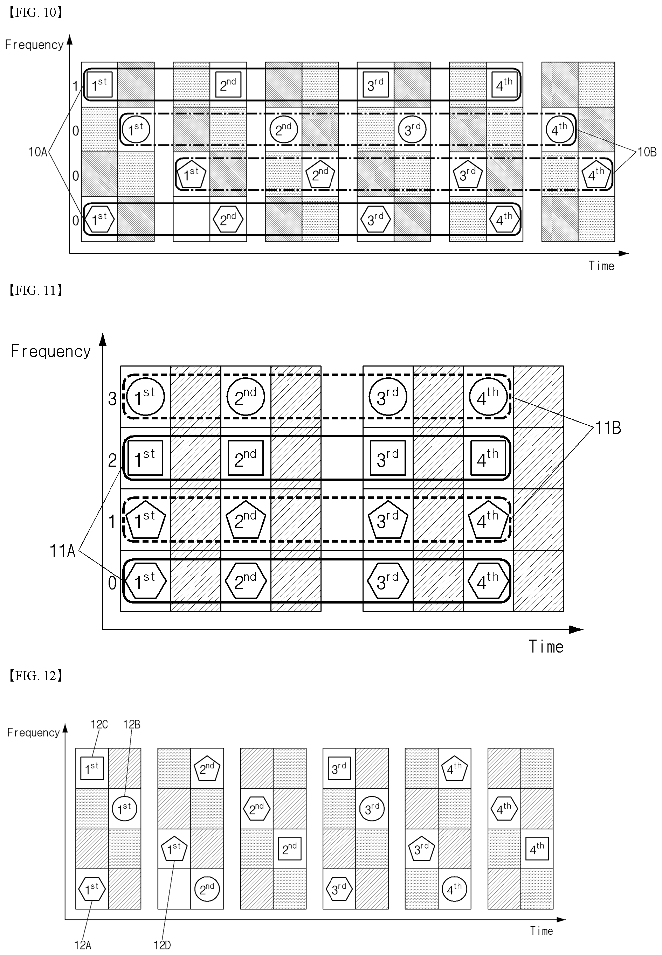

An example in which the RO group pairing is performed using [Method 3] is represented as in FIG. 10.

FIG. 10 illustrates an example of the RO group according to Method 3 of the present disclosure.

In FIG. 10, the following configuration is assumed.
# of repetition = 4, # of SSBs = 3, # of FDMed RO = 4, and # of SSBs per RO = 1

Referring to FIG. 10, at a first time instance, two starting ROs exist. That is, M = 2, and relative frequency domain index values are 0 for the lowest frequency RO and 1 for the highest frequency RO. The two RO groups may be determined to be the RO group pair (10A). At each of other time instances, only one starting RO exists (each relative frequency domain index value becomes 0), and therefore, the corresponding RO groups are not determined to be an RO group pair. That is, RO groups belonging to 10B are not used for RO group pairing.

[Method 3] may be configured to be mainly used in a situation in which many starting ROs exist at the specific time instance (for example, # of repetition = 4, # of SSBs = 2, # of FDMed RO = 4, and # of SSBs per RO = 1/4). This may be represented as in FIG. 11.

FIG. 11 illustrates another example of the RO group pairs according to Method 3 of the present disclosure.

In FIG. 11, the following configuration is assumed.
# of repetition = 4, # of SSBs = 2, # of FDMed RO = 4, and # of SSBs per RO = 1/4

Referring to FIG. 11, since M is 4, two RO group pairs 11A and 11B may be determined. The RO group pairs 11A and 11B may be based on the RO group pair combination #2: {0, 2}, {1, 3} (delta = 2) in the above-described examples.

The following lists terminal/base station operations that may be commonly applied to the above-described methods.

1. The base station may configure/indicate whether an RO frequency hopping operation is supported via the SIB.

In an example, whether the RO frequency hopping operation is supported may be configured/indicated for each PRACH configuration in which PRACH repetition is configured.

In an example, whether the RO frequency hopping operation is supported may be configured/indicated for each different number of repetitions within the PRACH configuration in which PRACH repetition is configured.

2. An RO group that does not belong to the specific RO group pair does not support the RO frequency hopping.

3. A specific RO group may not be redundantly included in two or more RO group pairs.

4. The RO group pairing may be defined among RO groups belonging to the time period X (K association pattern periods).

5. The following operation may be applied to the RO group into which N valid ROs are grouped, but all of the N ROs are not be used due to collision with other signals/channels.

Alt 1) The RO group is excluded from RO group pairing.

Alt 2) The RO group is also included in the RO group pairing, but ROs that cannot actually be transmitted are configured to be dropped without postponement.

6. The base station may configure, via the SIB, one of the methods to be equally applied to all PRACH configurations supporting the repetition. For example, the base station may indicate, via the SIB, that one of the methods is independently used for each PRACH configuration supporting the repetition.

<RO Frequency Hopping Pattern>

After the RO group pairing is completed using the above-described methods for RO group pairing determination (Methods 1-3), it is necessary to define how the terminal performs RO hopping. Hereinafter, RO frequency hopping patterns applicable between the two RO groups belonging to the RO group pair will be described in detail.

[Method A]

A. In the RO group consisting of N ROs according to the number N of repetitions, relative time indices of the respective ROs are referred to as indices 0, 1, 2, ..., N-1. From among even-indexed (0, 2, 4, ..., N-2) ROs, the RO in the next RO group may be selected as follows. From among the even-indexed (0, 2, 4, ..., N-2) ROs, the RO in the RO group in which the starting RO has a relatively smaller time index (or a relatively smaller frequency index when the time indices are the same) may be selected.

From among odd-indexed (1, 3, 5, ..., N-1) ROs, the RO in the next RO group may be selected as follows. From among the odd-indexed (1, 3, 5, ..., N-1) ROs, the RO in the other RO group not previously selected within the RO group pair may be selected.

For example, a case in which N is 4 and each RO group includes four ROs (RO 0 to RO 3) is assumed. An odd-indexed RO (for example, RO 1) in RO group 2 (or RO group 1) may be selected next to an even-indexed RO (for example, RO 0) in RO group 1 (or RO group 2).

[Example 1]          RO 0 in RO group 1 → RO 1 in RO group 2 → RO 2 in RO group 1 → RO 3 in RO group 2

[Example 2]          RO 0 in RO group 2 → RO 1 in RO group 1 → RO 2 in RO group 2 → RO 3 in RO group 1

RO frequency hopping is performed based on the RO selection described above.

B. The RO frequency hopping is performed among subsequently unselected ROs.

[Method B]

A. The starting RO in the RO group in which the starting RO has a relatively smaller time index (or a relatively smaller frequency index when the time indices are the same) between two RO groups (for example, RO group indices K & L) belonging to the RO group pair is selected. The RO corresponding to the next time index may be first selected through hopping with the other RO group within the RO group pair that has not been previously selected.

B. The RO frequency hopping may be performed based on subsequently unselected ROs.

Additionally, an example of the RO frequency hopping pattern using [Method A] and/or [Method B] is represented as in FIG. 12.

FIG. 12 illustrates a frequency hopping pattern according to an embodiment of the present disclosure.

In FIG. 12, the following configuration is assumed.

# of repetition = 4, # of SSBs = 3, # of FDMed RO = 4, and # of SSBs per RO = 1

Specifically, FIG. 12 illustrates an example in which a situation in which RO group pairing is performed using [Method 2] is assumed. That is, the RO group pairs are the same as 9A and 9B of FIG. 9. The starting ROs of the RO groups belonging to the first RO group pair corresponding to 9A of FIG. 9 are 12A and 12B. The starting ROs of the RO groups belonging to the second RO group pair corresponding to 9B of FIG. 9 are 12C and 12D.

In an example, the RO frequency hopping pattern starting from 12A is as follows.

The first RO (for example, RO 0) in RO group 1 → the second RO (for example, RO 1) in the RO group 2 → the third RO (for example, RO 2) in RO group 1 → the fourth RO (for example, RO 3) in the RO group 2

In an example, the RO frequency hopping pattern starting from 12B is as follows.

The first RO (for example, RO 0) in the RO group 2 → the second RO (for example, RO 1) in RO group 1 → the third RO (for example, RO 2) in the RO group 2 → the fourth RO (for example, RO 3) in RO group 1

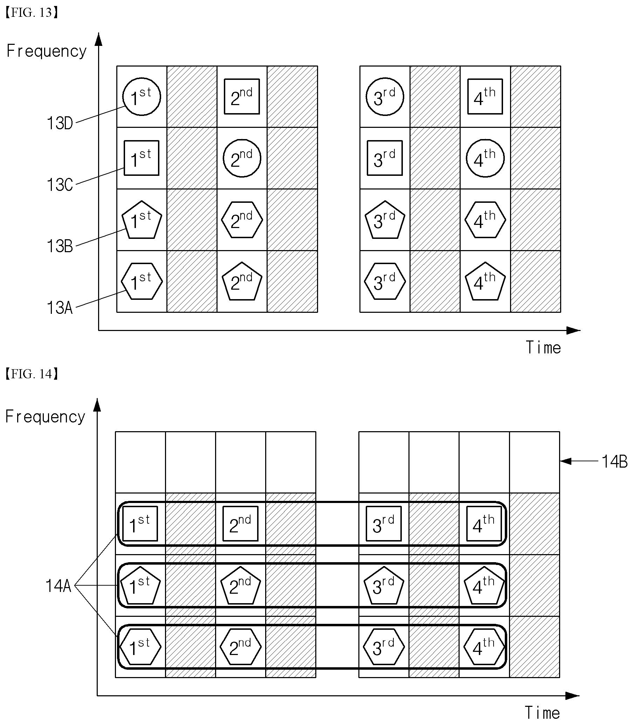

Another example of the RO frequency hopping pattern using [Method A] and/or [Method B] is represented as in FIG. 13.

FIG. 13 illustrates a frequency hopping pattern according to another embodiment of the present disclosure.

In FIG. 13, the following configuration is assumed.

# of repetition = 4, # of SSBs = 2, # of FDMed RO = 4, and # of SSBs per RO = 1/4

Specifically, FIG. 13 illustrates an example in which a situation in which RO group pairing is performed using [Method 3] described above is assumed. In the case of FIG. 13, RO group pair combination #1: {0, 1}, {2, 3} (delta = 1) is assumed. That is, the starting ROs in the RO groups 0 and 1 belonging to the first RO group pair are 13A and 13B. The starting ROs in the RO groups 2 and 3 belonging to the second RO group pair are 13C and 13D.

In an example, the RO frequency hopping pattern starting from 13A is as follows.

The first RO (for example, RO O) in the RO group 0 → the second RO (for example, RO 1) in RO group 1 → the third RO (for example, RO O2) in RO group 0 → the fourth RO (for example, RO 3) in RO group 1

In an example, the RO frequency hopping pattern starting from 13B is as follows.

The first RO (for example, RO O) in RO group 1 → the second RO (for example, RO 1) in RO group 0 → the third RO (for example, RO 2) in RO group 1 → the fourth RO (for example, RO 3) in the RO group 0

[Method C]

A. In the RO group consisting of N ROs according to the number N of repetitions, relative time indices of the respective ROs are referred to as indices 0, 1, 2, ..., N-1. After the first X ROs are selected, Y ROs may be selected.

The X ROs may be ROs in the RO group in which the starting RO has a relatively smaller time index (or a relatively smaller frequency index when the time indices are the same).

The Y ROs may be ROs in the other RO group that has not been previously selected within the RO group pair.

Thereafter, the above operation may be repeatedly performed until the number of repetitions is satisfied.

The X and Y values for the above-described RO frequency hopping may be configured/indicated/defined as follows.

In an example, the base station may configure/indicate X and Y via the SIB for each PRACH configuration in which repetition is configured.

In an example, the base station may configure/indicate X and Y via the SIB for each number of repetitions within PRACH configurations in which repetition is configured.

In an example, X and Y for the above-described RO frequency hopping may be defined in advance.

In an example, X and Y for the above-described RO frequency hopping may be implicitly determined by the terminal.

1. In an example, when X = 1 and Y = 1, this is the same as [Method A] or [Method B].

2. In an example, X and Y may be independently configured/indicated. For example, only X may be indicated and Y may be replaced with X and used (or only X may be introduced and used without Y). That is, the RO frequency hopping may be performed using the ROs in different RO groups belonging to the RO group pair every X transmissions.

3. Specific predefined examples of the X and Y values are as follows. In an example, the X value may set to floor(N/d) and the Y value may set to ceil(N/d). In an example, the X value may set to ceil(N/d) and the Y value may set to floor(N/d) (for example, when d = 2, N = X + Y, and when d = 4, N = 2X + 2Y).

B. The base station may configure/indicate X and Y based on the minimum number of repetitions configured in the PRACH configuration. When X and Y are applied to a larger number of repetitions, the terminal may be configured to sequentially repeatedly apply X and Y.

C. The base station may configure/indicate X and Y for a relatively small number of repetitions within the PRACH configuration. When X and Y are applied to a larger number of repetitions, the terminal may be configured to aggregate the configured/indicated values until the number of repetitions is satisfied.

D. The base station may configure or indicate the X and Y values for the minimum number of repetitions configured in the PRACH configuration. The terminal may be configured to apply an amount corresponding to a scaling of the number of repetitions selected by the terminal relative to the minimum number of repetitions to the X and Y values. That is, a case in which the minimum number of repetitions is 4 and the number of repetitions selected by the terminal is 8 may be assumed. In this case, 2X and 2Y to which scaling by 2 (= 8/4) is applied may be used.

As described above, a plurality of initial RO groups may be configured, and two RO groups may be paired based thereon. Thereafter, an operation of determining the RO frequency hopping pattern between the RO groups within the RO group pair may be performed. The above-described operations (pairing and pattern determination operations) may be performed explicitly or implicitly.

Thereafter, at a point in time when the PRACH repetition transmission is required from the perspective of the terminal, one starting RO may be randomly selected in a MAC layer. Thereafter, repetition transmission may be performed according to the previously configured RO frequency hopping pattern.

In this case, an RA-RNTI value determined by the terminal and the base station may be defined to be calculated based on a last valid RO among multiple ROs to which the frequency hopping pattern is applied (similarly to an existing PRACH repetition operation). That is, the RA-RNTI value may be calculated regardless of whether actual transmission (that is, drop) occurs based on the last valid RO.

Further, a RAR window starting point determined by the terminal and the base station may be defined as starting after a last OFDM symbol of the last valid RO among the multiple ROs to which the frequency hopping pattern is applied (similarly to the existing PRACH repetition operation). Similarly, the RAR window starting point may be defined regardless of whether actual transmission (that is, drop) occurs based on the last valid RO.

<RO Group Pairing Determination and RO Frequency Hopping Pattern for Multiple RO Groups>

In the above-described embodiments, a case in which two RO groups are included in a specific RO group pair was considered. However, a case in which, even when four FDMed ROs are configured in the base station, ROs in a specific frequency domain may always be invalid ROs may be assumed. In such a case, a maximum of three starting ROs remain at the specific time instance. When RO group pairing is performed by using only two RO groups corresponding to two of the starting ROs, one RO group among most RACH resources always remains with the RO group not subjected to frequency hopping. Accordingly, there is a disadvantage in that the number of RO groups that do not support the frequency hopping becomes excessively large. A method for resolving this will be described in detail below.

Specifically, a method of determining P RO groups (P being a positive integer greater than 2) to be included in a specific RO group pair is conceivable. Simply, implicit methods among the methods for RO group pairing determination may be extended and applied.

In an example, according to [Method 1] and/or [Method 2], the first two RO groups in a progression order are determined to be the RO group pair. In the present embodiment, the above-described operation may be performed as follows. The first P RO groups in the progression order may be determined to be the RO group pair. P may be 3, and this may be represented as in FIG. 14.

FIG. 14 illustrates pairing of the P RO groups according to the embodiment of the present disclosure.

In FIG. 14, the following configuration is assumed.

# of repetition = 4, # of SSBs = 2, # of FDMed RO = 4, and # of SSBs per RO = 1/4

Referring to FIG. 14, three RO groups may be determined to be the RO group pair 14A. 14B indicates invalid ROs.

Additionally, after RO group pairing based on the P RO groups is completed, the RO frequency hopping pattern among the P RO groups may be required. That is, in the RO group consisting of N ROs according to the number N of repetitions, relative time indices of the ROs may be defined as indices 0, 1, 2, ..., N-1, and relative frequency indices of the ROs may be defined as indices 0, 1, 2, ..., P-1.

Hereinafter, the RO frequency hopping pattern based on the RO group pair including the P RO groups based on the above definitions will be described in detail.

When the RO frequency hopping is enabled, the terminal first selects the starting RO having the smallest relative time index and/or frequency index. Thereafter, the terminal selects the RO while incrementing the relative time index by 1 and changing the relative frequency index by k. ROs for multiple PRACH transmissions may be configured to be selected as described above. Thereafter, a next starting RO may be determined in ascending order of the frequency first and time second. That is, the ascending order of the frequency may be applied as a first order and the ascending order of the time may be applied as a second order to determine the next starting RO.

The above operation may be configured to be repeatedly performed from the starting RO. When the changed relative frequency index is lower than 0 or higher than P-1, a value between 0 and P-1 may be configured to be selected through a modular operation using the value P.

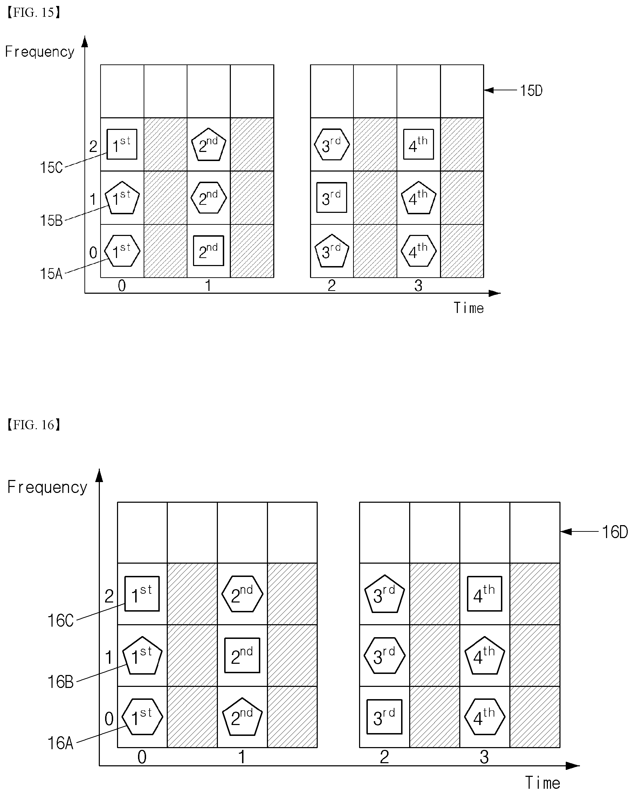

The above method is represented as in FIG. 15.

FIG. 15 illustrates an example of a frequency hopping pattern based on the P RO groups according to an embodiment of the present disclosure. Specifically, FIG. 15 illustrates an example in which RO frequency hopping is applied when the RO group pair is determined as in FIG. 14. In this case, N = 4, P = 3, and k = 1 are applied.

For example, the RO frequency hopping pattern starting from 15A is as follows:

The first RO (for example, RO 0) in the RO group 0 → the second RO (for example, RO 1) in RO group 1 → the third RO (for example, RO 2) in the RO group 2 → the fourth RO (for example, RO 3) in the RO group 0

Further, another example of the method may be represented as FIG. 16.

FIG. 16 illustrates another example of the frequency hopping pattern based on the P RO groups according to an embodiment of the present disclosure.

Specifically, FIG. 16 illustrates an example in which RO frequency hopping is applied when the RO group pair is determined as in FIG. 14. In this case, N = 4, P = 3, and k = -1 are applied.

In an example, the RO frequency hopping pattern starting from 16A is as follows:

The first RO (for example, RO 0) in the RO group 0 → the second RO (for example, RO 1) in the RO group 2 → the third RO (for example, RO 2) in RO group 1 → the fourth RO (for example, RO 3) in the RO group 0

Specifically, a relative frequency index of the first RO in RO group 0 is 0, and adding k = -1 yields -1. Since a modular value based on P for -1 (that is, -1 mod 3) is 2, the next RO becomes the second RO (RO1) in RO group 2.

Additionally, the number of RO groups included in RO group pairing may be configured to be different depending on the number of starting ROs at the specific time instance (or depending on whether the number of starting ROs at the specific time instance is even or odd).

In an example, when the number of starting ROs at the specific time instance is 2, 4, 6, or 8 (that is, an even number), the number of RO groups for RO group pairing may be defined as 2.

In an example, when the number of starting ROs at the specific time instance is 5 or 7 (that is, an odd number other than 1 and 3), RO group pairing may be performed as follows. Starting from the lowest frequency, every two RO groups based on two starting ROs are determined to be the RO group pair. Three RO groups based on the remaining three starting ROs may be determined to be the RO group pair.

In an example, when the number of starting ROs at the specific time instance is 3, three RO groups based on the three starting ROs may be determined to be the RO group pair.

Thereafter, different RO frequency hopping patterns may be applied to the RO group pair grouped by two and the RO group pair grouped by three. A method for the RO frequency hopping patterns may be configured to be applied according to each case (that is, according to the number of the RO groups belonging to the RO group pair).

<RO Group Determination Method Considering RO Frequency Hopping>

When the RO group is determined, a form considering the RO frequency hopping operation is conceivable. A case in which a PRACH repetition factor is set to N and that M FDMed ROs exist at the specific time instance may be assumed. Within a specific time period X (for example, K SSB-to-RO association pattern periods), multiple ROs may be sequentially selected among valid ROs associated with the same SSB. A method for constituting the RO group considering frequency hopping based on the selection is conceivable.

Specifically, within the specific time period X, a valid RO having the smallest time/frequency index may be set as the starting RO. floor(N/2) (or ceil(N/2)) ROs having the same frequency index as the starting RO (including the starting RO) may be selected.

Among valid ROs existing at time instances after the previously selected ROs, ceil(N/2) (or floor(N/2)) other ROs having a frequency index that is separated from the frequency index of the previously selected starting RO by floor(M/2) may be selected. In this case, ceil(M/2) instead of floor(M/2), the number of RBs occupied by one RO, or an interval of L ROs in frequency may be applied.

As described above, i) the first-selected floor(N/2) (or ceil(N/2)) ROs and ii) the subsequently selected ceil(N/2) (or floor(N/2)) ROs may be configured to constitute (one) RO group to be used for PRACH repetition.

In an example, the value L may be defined in advance for each PRACH configuration (or for each number of repetitions). For example, the value L may be configured/indicated to the terminal by the base station.

The operation may be configured to be repeatedly performed until the time period X ends.

Further, the proposed method may be configured in/applied to other UL signals/channels such as PUSCH/-PUCCH. Further, examples of the proposed schemes described above may also be included as the implementation methods of the present disclosure, and thus, it is apparent that the examples may be regarded as types of proposed schemes. Further, the proposed schemes may be implemented independently or may be implemented in a combined (or merged) form of some proposed schemes. Rules may be defined such that the base station informs the terminal of information on whether the methods are applied (or information on rules of the methods) via a predefined signal (for example, a physical layer signal or a higher layer signal). The higher layer may include, for example, one or more of functional layers such as MAC, RLC, PDCP, RRC, and SDAP.

The methods, embodiments, or descriptions for implementing the methods proposed herein may be separately applied, or two or more of the methods (or embodiments or descriptions) may be combined and applied.

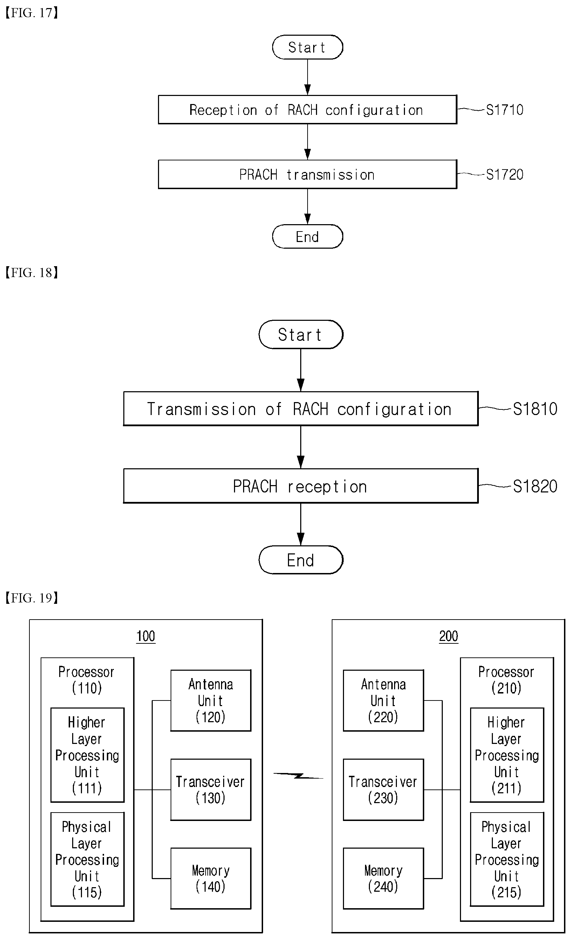

From an implementation aspect, operations of the base station/terminal according to the above-described embodiments (for example, operations based on at least one of methods for RO group pairing determination, methods for an RO frequency hopping pattern, a method for RO group pairing determination for multiple RO groups, and/or RO group determination methods considering the RO frequency hopping) may be processed by a device of FIG. 19 (for example, processors 110 and 210 of FIG. 19).

Further, the operations of the base station/terminal according to the above-described embodiments (for example, operations based on at least one of the methods for RO group pairing determination, the methods for an RO frequency hopping pattern, the method for RO group pairing determination for multiple RO groups, and/or the RO group determination methods considering the RO frequency hopping) may be stored in the form of instructions/programs (for example, instructions and executable code) for driving at least one processor (for example, 110 and 210 of FIG. 19) in a memory (for example, 140 and 240 of FIG. 19).

Hereinafter, the above-described embodiments will be described in detail with reference to FIGS. 17 and 18 in terms of the operations of the terminal and the base station. The methods to be described hereinafter are merely distinguished for convenience of description, and it is obvious that some configurations of one method may be replaced with some configurations of another method and/or the configurations may be combined and applied.

FIG. 17 is a flowchart illustrating a method performed by a terminal according to an embodiment of the present disclosure.

Referring to FIG. 17, the method performed by a terminal according to an embodiment of the present disclosure includes a RACH configuration reception step (S1710) and a PRACH transmission step (S1720).

In S1710, the terminal receives a random access channel (RACH) configuration from the base station. For example, the RACH configuration may include information based on the configuration/operation related to the random access preamble described above.

In S1720, the terminal transmits the physical random access channel (PRACH) to the base station based on the sets. For example, the transmission of the PRACH may be performed based on the configuration/operation related to the random access preamble described above.

Specifically, each of the sets may include PRACH occasions based on the number of repetitions (for example, $N_{\text{preamble}}^{\text{rep}}$). For example, each set may include $N_{\text{preamble}}^{\text{rep}}$ valid PRACH occasions. The valid PRACH occasions are consecutive in time, use the same frequency resource(s), and are associated with the same synchronization signal(s)/physical broadcast channel block index(es) (SS/PBCH Block index).

The transmission of the PRACH may be interpreted as/replaced with transmission of the MSG1. That is, repetition of the MSG1 may be interpreted as/replaced with repetition of the PRACH. When the random access procedure is a Type-2 random access procedure, the MSG1 may be interpreted as/replaced with the MSGA.

The frequency hopping may be supported for the PRACH repetition transmission based on at least one of the above embodiments (for example, at least one of the methods for RO group pairing determination (Methods 1 to 3), the methods for an RO frequency hopping pattern (Methods A to C), the method for RO group pairing determination for multiple RO groups, and/or the RO group determination methods considering the RO frequency hopping). That is, the PRACH may be transmitted based on frequency hopping. Hereinafter, this will be described in detail. In the following description, "PRACH occasion" may mean an RO in the above-described embodiments, "set" may mean an "RO group" in the above-described embodiments, and the "first PRACH occasion" of each set may mean a "starting RO" in each RO group in the above-described embodiments.

According to one embodiment, the sets may include a first set and a second set related to the frequency hopping. The first set and the second set may be determined based on an order of the time resource index and/or the frequency resource index of the first PRACH occasion in each of the sets within a time period. The present embodiment may be based on one of Method 1 to Method 3 for RO group pairing determination. For example, the time period may mean the time period X (K association pattern periods) in the above-described embodiments. The time period X may mean the time period mentioned in the configuration/operation related to the random access preamble described above. For example, the first set may mean one (for example, RO group 1) of the two RO groups belonging to the above-described RO group pair, and the second set may mean the other (for example, RO group 2) of the two RO groups.

In an example, the second set may be determined in ascending order of the time resource index from the first set having the lowest frequency resource index among the sets within the time period. The present embodiment may be based on [2-1] of Method 2. Referring to FIG. 9, the first set and the second set may be based on 9A.

In an example, based on there being no set based on a time resource index greater than that based on the first set among the sets, the second set may be determined in ascending order of the frequency resource index from the first set. The present embodiment may be based on [2-1-A] of Method 2. Referring to FIG. 9, the first set and the second set may be based on 9B. In this case, a case in which there is no set having a time resource index greater than that based on the first set may include a case in which the sets are based on the same time resource index (for example, see the 8A and 8B in FIG. 8).

According to one embodiment, the frequency hopping may be performed based on i) a first PRACH occasion selected from the first set or the second set and ii) a second PRACH occasion selected from the second set or the first set. The present embodiment may be based on one of Method A to Method C for the RO frequency hopping patterns. The following description refers to the RO frequency hopping pattern of FIG. 12.

Referring to 12A of FIG. 12, the RO frequency hopping pattern starting from 12A as described above is as follows:

The first RO (for example, RO 0) in RO group 1 → the second RO (for example, RO 1) in the RO group 2 → the third RO (for example, RO 2) in RO group 1 → the fourth RO (for example, RO 3) in the RO group 2

In an example, the first PRACH occasion may be the first PRACH occasion (for example, RO 0) or the third PRACH occasion (for example, RO 2) of the first set, and the second PRACH occasion may be the second PRACH occasion (for example, RO 1) or the fourth PRACH occasion (for example, RO 3) of the second set.

Referring to 12B of FIG. 12, the RO frequency hopping pattern starting from 12B as described above is as follows:

The first RO (for example, RO 0) in the RO group 2 → the second RO (for example, RO 1) in RO group 1 → the third RO (for example, RO 2) in the RO group 2 → the fourth RO (for example, RO 3) in RO group 1

In an example, the first PRACH occasion may be the first PRACH occasion (for example, RO 0) or the third PRACH occasion (for example, RO 2) of the second set, and the second PRACH occasion may be the second PRACH occasion (for example, RO 1) or the fourth PRACH occasion (for example, RO 3) of the first set.

As described above, the first PRACH occasion and the second PRACH occasion are based on different sets. The second PRACH occasion may be located after the first PRACH occasion in the time domain. In other words, an index associated with the second PRACH occasion (for example, one of indices 0 to N-1 based on the number of repetitions N) may be a next index of an index associated with the first PRACH occasion. For example, when the number of repetitions is 4, frequency hopping may be performed as follows.

First PRACH occasion (RO 0) → Second PRACH occasion (RO 1) → First PRACH occasion (RO 2) → Second PRACH occasion (RO 3)

According to one embodiment, the sets may include i) the first set and the second set and/or ii) the third set. The present embodiment may be based on Method 1 to Method 3 and/or the RO group determination method considering the RO frequency hopping. For example, the third set may include PRACH occasions related to the frequency hopping. That is, the third set may mean the RO group configured in consideration of the RO frequency hopping. Hereinafter, this will be described in detail.

The frequency hopping related to the third set may be performed based on indices related to the number of repetitions (for example, 0 to N-1 when the number of repetitions is N). For example, when the number of repetitions is 4, indices of four PRACH occasions included in the third set may be 0 to 3. The following description refers to the time/frequency domain of FIG. 15.

The third set may include four PRACH occasions. Indices 0 to 3 may correspond to time resource indices 0 to 3. Specifically, a PRACH occasion based on index 0 may have frequency resource index 0, a PRACH occasion based on index 1 may have frequency resource index 1, a PRACH occasion based on index 2 may have frequency resource index 0, and a PRACH occasion based on index 3 may have frequency resource index 1. In the present example, it was assumed that the frequency interval corresponds to one PRACH occasion (that is, a difference between the frequency resource indices is 1).

Within the third set, the frequency resource index of the PRACH occasion based on one index (for example, 0) among the indices may differ from the frequency resource index of the PRACH occasion based on a next index (for example, 1) among the indices. The frequency hopping may be performed based on the PRACH occasions within a single set (the third set) without changing sets. In this case, a frequency interval between the PRACH occasions based on different indices may be based on at least one of Method 1 to Method 3. For example, the frequency interval may be defined in advance. For example, the frequency interval may be determined based on the number M of frequency-division multiplexed PRACH occasions at the same time instance (for example, floor(M/2) or ceil(M/2)).

According to one embodiment, the method may further include a SIB reception step. Specifically, the terminal may receive the SIB from the base station. The SIB may include configuration related to the frequency hopping. The SIB reception step may be performed before S1710.

The configuration related to the frequency hopping may include information based on the above-described embodiments. For example, the configuration related to the frequency hopping may include i) information indicating whether frequency hopping is enabled, ii) information related to the determination of the first set and the second set, and/or iii) information related to the determination of the PRACH occasions for frequency hopping.

Operations based on S1710 to S1720 and the SIB reception step may be implemented by the device of FIG. 19. For example, the terminal 200 may control one or more transceivers 230 and/or one or more memories 240 to perform the operations based on S1710 to S1720 and the SIB reception step.

Hereinafter, the above-described embodiments will be described in terms of base station operations.

Steps S1810 to S1820 and an SIB transmission step to be described below correspond to S1710 to S1720 and the SIB reception step in FIG. 17. Considering this correspondence, redundant descriptions are omitted. That is, detailed description of base station operation to be described below may be replaced with the description/embodiment of FIG. 17 corresponding to the operation. For example, the description/embodiment of S1710 to S1720 of FIG. 17 may be additionally applied to the base station operation of S1810 to S1820 to be described below. For example, the description/embodiment of the terminal operation in the SIB reception step may be additionally applied to the base station operation in the SIB transmission step to be described below.

FIG. 18 is a flowchart illustrating a method performed by a base station according to another embodiment of the present disclosure.

Referring to FIG. 18, the method performed by the base station according to the other embodiment of the present disclosure includes a RACH configuration transmission step (S1810) and a PRACH reception step (S1820).

In S1810, the base station transmits the random access channel (RACH) configuration to the terminal. For example, the RACH configuration may include information based on configuration/operation related to the random access preamble described above.

In S1820, the base station receives the (PRACH) from the terminal based on the sets. For example, the PRACH reception may be performed based on the configuration/operation related to the random access preamble.

According to one embodiment, the method may further include the SIB transmission step. Specifically, the base station transmits a system information block (SIB) to the terminal. The SIB may include the configuration related to frequency hopping. The SIB transmission step may be performed before S1810.

Operations based on S1810 to S1820 and the SIB transmission step described above may be implemented by the device of FIG. 19. For example, the base station 100 may control one or more transceivers 130 and/or one or more memories 140 to perform the operations based on S1810 to S1820 and the SIB transmission step.

A device to which an embodiment of the present disclosure is applicable (a device implementing the method/operation according to an embodiment of the present disclosure) is described below with reference to FIG. 19.

FIG. 19 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) comprising:

   receiving a Random Access Channel (RACH) configuration; and
   transmitting a Physical Random Access Channel (PRACH) based on sets,
   wherein each of the sets includes PRACH occasions based on the number of repetitions,
   wherein the sets include a first set and a second set related to frequency hopping, and
   wherein the first set and the second set are determined based on an order of a time resource index and/or a frequency resource index of a first PRACH occasion in each set among the sets within a time period.

2. The method of claim 1, wherein the second set is determined in an ascending order of the time resource index from the first set having the lowest frequency resource index among the sets within the time period.

3. The method of claim 2, wherein based on that there is no set among the sets based on a time resource index larger than the time resource index based on the first set: the second set is determined in an ascending order of the frequency resource index from the first set.

4. The method of claim 1, wherein the frequency hopping is performed based on i) a first PRACH occasion selected from the first set or the second set and ii) a second PRACH occasion selected from the second set or the first set.

5. The method of claim 4, wherein the second PRACH occasion is located after the first PRACH occasion in a time domain.

6. The method of claim 1, wherein the sets include i) the first set and the second set and/or ii) a third set, and wherein the third set includes the PRACH occasions related to the frequency hopping.

7. The method of claim 6, wherein the frequency hopping related to the third set is performed based on indices related to the number of repetitions, and
   wherein, in the third set, a frequency resource index of a PRACH occasion based on one of the indices is different from a frequency resource index of a PRACH occasion based on a next index among the indices.

8. The method of claim 1, further comprising receiving a System Information Block (SIB), wherein the SIB includes a configuration related to the frequency hopping.

9. The method of claim 8, wherein the configuration related to the frequency hopping includes i) information representing whether the frequency hopping is enabled, ii) information related to determination of the first set and the second set, and/or iii) information related to determination of a PRACH occasion for the frequency hopping.

10. A User Equipment (UE) comprising:

    one or more transceivers;
    one or more processors; and
    one or more memories connected to the one or more processors and storing instructions,
    wherein the instructions, based on being executed by the one or more processors, configure the one or more processors to perform all steps of the method according to any one of claims 1 to 9.

11. An apparatus comprising one or more memories and one or more processors functionally connected to the one or more memories,

wherein the one or more memories store instructions that, based on being executed by the one or more processors, configure the one or more processors to perform all steps of the method according to any one of claims 1 to 9.

12. One or more non-transitory computer-readable media storing instructions, wherein the instructions, executable by one or more processors, configure the one or more processors to perform all steps of the method according to any one of claims 1 to 9.

13. A method performed by a base station comprising:

transmitting a Random Access Channel (RACH) configuration; and
receiving a Physical Random Access Channel (PRACH) based on sets,
wherein each of the sets includes PRACH occasions based on the number of repetitions,
wherein the sets include a first set and a second set related to frequency hopping, and
wherein the first set and the second set are determined based on an order of a time resource index and/or a frequency resource index of a first PRACH occasion in each set among the sets within a time period.

14. A base station comprising:

one or more transceivers;
one or more processors; and
one or more memories connected to the one or more processors and storing instructions,
wherein the instructions, based on being executed by the one or more processors, configure the one or more processors to perform all steps of the method according to claim 13.

【FIG. 1】

INITIAL CELL SEARCH | SYSTEM INFORMATION RECEPTION | RANDOM ACCESS PROCEDURE | GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S101    S102    S103    S104    S105    S106    S107    S108

· DL/UL ACK/NACK
· UE CQI/PMI RI REPORT USING PUSCH AND PUCCH

【FIG. 2】

RACH slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|
| A1 | | A1 | | A1 | | A1 | | A1 | | A1 | | Null | |
| A1 | | A1 | | A1 | | A1 | | A1 | | A1/B1 | | | |
| B1 | | B1 | | B1 | | B1 | | B1 | | B1 | | | |
| A2 | | | | A2 | | | | A2 | | | | Null | |
| A2 | | | | A2 | | | | A2/B2 | | | | | |
| A3 | | | | | | A3 | | | | | | Null | |
| A3 | | | | | | A3/B3 | | | | | | | |
| B4 | | | | | | | | | | | | | |
| C0 | | C0 | | C0 | | C0 | | C0 | | C0 | | | |
| C2 | | | | C2 | | | | C2 | | | | | |

(a) Starting OFDM symbol is '0'

RACH slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|
| | Null | A1 | | A1 | | A1 | | A1 | | A1 | | A1 | |
| | Null | A1 | | A1 | | A1 | | A1 | | A1 | | A1/B1 | |
| | Null | B1 | | B1 | | B1 | | B1 | | B1 | | B1 | |
| | Null | A2 | | | | A2 | | | | A2 | | | |
| | Null | A2 | | | | A2 | | | | A2/B2 | | | |
| | Null | A3 | | | | | | A3 | | | | | |
| | Null | A3 | | | | | | A3/B3 | | | | | |
| | Null | B4 | | | | | | | | | | | |
| | Null | C0 | | C0 | | C0 | | C0 | | C0 | | C0 | |
| | Null | C2 | | | | | | C2 | | | | | |

(b) Starting OFDM symbol is '2'

【FIG. 3】

· Contention based

(a)

| UE | | gNB |
|---|---|---|
| | RA preamble (MSG1) | |
| | RA response (MSG2) | |
| | Scheduled Transmission (MSG3) | |
| | Contention Resolution (MSG4) | |

· Contention-free

(b)

| UE | | gNB |
|---|---|---|
| | RA preamble assignment | |
| | RA preamble (MSG1) | |
| | RA response (MSG2) | |

【FIG. 4】

【FIG. 5】

【FIG. 6】

【FIG. 7】

【FIG. 8】

【FIG. 9】

【FIG. 10】

【FIG. 11】

【FIG. 12】

【FIG. 13】

【FIG. 14】

【FIG. 15】

【FIG. 16】

[FIG. 17]

[FIG. 18]

[FIG. 19]

## INTERNATIONAL SEARCH REPORT

| International application No. |
| --- |
| **PCT/KR2024/013235** |

| A. | CLASSIFICATION OF SUBJECT MATTER |
| --- | --- |

**H04W 74/0833**(2024.01)i; **H04L 5/00**(2006.01)i; **H04W 72/0453**(2023.01)i; **H04W 72/23**(2023.01)i; **H04W 72/0446**(2023.01)i; **H04W 48/10**(2009.01)i; **H04W 4/70**(2018.01)i

According to International Patent Classification (IPC) or to both national classification and IPC

| B. | FIELDS SEARCHED |
| --- | --- |

Minimum documentation searched (classification system followed by classification symbols)

H04W 74/0833(2024.01); H04W 36/00(2009.01); H04W 72/12(2009.01); H04W 72/232(2023.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스 채널 설정(RACH configuration), 반복 횟수(number of repetitions), 기회(occasion), 주파수 호핑(frequency hopping), 자원 인덱스 순서(resource index order)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2023-0284282 A1 (OFINNO, LLC) 07 September 2023 (2023-09-07)<br>See paragraphs [0231], [0280], [0284], [0287] and [0315]. | 1-2,4-6,8-14 |
| A | | 3,7 |
| Y | HUAWEI et al. Discussion on PRACH coverage enhancements. R1-2306545, 3GPP TSG-RAN WG1 Meeting #114. Toulouse, France. 11 August 2023.<br>See pages 1-3, 12-14 and 20. | 1-2,4-6,8-14 |
| Y | KR 10-2022-0081363 A (LG ELECTRONICS INC.) 15 June 2022 (2022-06-15)<br>See paragraphs [0324]-[0329]. | 2 |
| A | KR 10-2023-0006492 A (VIVO MOBILE COMMUNICATION CO., LTD.) 10 January 2023 (2023-01-10)<br>See claims 1-3. | 1-14 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 December 2024** | **23 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/013235** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2023-0044459 A (TELEFONAKTIEBOLAGET LM ERICSSON(PUBL)) 04 April 2023 (2023-04-04)<br>    See paragraphs [0299]-[0344]; and figure 8. | 1-14 |

Form PCT/ISA/210 (second sheet) (July 2022)

**INTERNATIONAL SEARCH REPORT**
Information on patent family members

| International application No. |
| --- |
| **PCT/KR2024/013235** |

| Patent document cited in search report | | | Publication date (day/month/year) | Patent family member(s) | | | Publication date (day/month/year) |
| --- | --- | --- | --- | --- | --- | --- | --- |
| US | 2023-0284282 | A1 | 07 September 2023 | US | 11438931 | B2 | 06 September 2022 |
| | | | | US | 11653393 | B2 | 16 May 2023 |
| | | | | US | 2020-0314913 | A1 | 01 October 2020 |
| | | | | US | 2022-0353922 | A1 | 03 November 2022 |
| KR | 10-2022-0081363 | A | 15 June 2022 | CN | 114762436 | A | 15 July 2022 |
| | | | | EP | 4027742 | A1 | 13 July 2022 |
| | | | | JP | 2022-552646 | A | 19 December 2022 |
| | | | | JP | 7581339 | B2 | 12 November 2024 |
| | | | | US | 12082263 | B2 | 03 September 2024 |
| | | | | US | 2024-0049289 | A1 | 08 February 2024 |
| | | | | WO | 2021-066605 | A1 | 08 April 2021 |
| KR | 10-2023-0006492 | A | 10 January 2023 | CN | 113119822 | A | 16 July 2021 |
| | | | | EP | 4138484 | A1 | 22 February 2023 |
| | | | | JP | 2021-111608 | A | 02 August 2021 |
| | | | | JP | 2023-520823 | A | 19 May 2023 |
| | | | | JP | 7523573 | B2 | 26 July 2024 |
| | | | | US | 12082656 | B2 | 10 September 2024 |
| | | | | US | 2023-0038092 | A1 | 09 February 2023 |
| | | | | US | 2023-0044466 | A1 | 09 February 2023 |
| | | | | WO | 2021-143940 | A1 | 22 July 2021 |
| | | | | WO | 2021-208596 | A1 | 21 October 2021 |
| | | | | WO | 2021-208886 | A1 | 21 October 2021 |
| KR | 10-2023-0044459 | A | 04 April 2023 | AU | 2021-320067 | A1 | 23 March 2023 |
| | | | | BR | 112023000295 | A2 | 05 December 2023 |
| | | | | BR | 112023001415 | A2 | 14 February 2023 |
| | | | | CA | 3186690 | A1 | 10 February 2022 |
| | | | | CN | 116158172 | A | 23 May 2023 |
| | | | | EP | 4193767 | A1 | 14 June 2023 |
| | | | | JP | 2023-536913 | A | 30 August 2023 |
| | | | | JP | 7549734 | B2 | 11 September 2024 |
| | | | | KR | 10-2023-0044497 | A | 04 April 2023 |
| | | | | MX | 2023001304 | A | 22 February 2023 |
| | | | | PE | 20230910 | A1 | 01 June 2023 |
| | | | | US | 2023-0262753 | A1 | 17 August 2023 |
| | | | | US | 2024-0107521 | A1 | 28 March 2024 |
| | | | | WO | 2022-028374 | A1 | 10 February 2022 |
| | | | | WO | 2022-029652 | A1 | 10 February 2022 |
| | | | | WO | 2022-148878 | A1 | 14 July 2022 |

Form PCT/ISA/210 (patent family annex) (July 2022)